# EUROPÄISCHE PATENTSCHRIFT

(11) **EP 4 147 101 B1**
(45) Veröffentlichungstag und Bekanntmachung des Hinweises auf die Patenterteilung: **06.08.2025**
(21) Anmeldenummer: 21722779.2
(22) Anmeldetag: 23.04.2021
(51) Int. Cl.: G05B 19/402, G06N 3/08, B65C 9/06

(54) **BEHÄLTERBEHANDLUNGSMASCHINE UND VERFAHREN ZUM AUSRICHTEN EINES BEHÄLTERS IN EINER BEHÄLTERAUFNAHME EINER BEHÄLTERBEHANDLUNGSMASCHINE**
CONTAINER TREATMENT MACHINE AND METHOD FOR ALIGNING A CONTAINER IN A CONTAINER RECEPTACLE OF A CONTAINER TREATMENT MACHINE
MACHINE DE TRAITEMENT DE CONTENANTS ET PROCÉDÉ D'ALIGNEMENT D'UN CONTENANT DANS UN RÉCEPTACLE DE CONTENANTS D'UNE MACHINE DE TRAITEMENT DE CONTENANTS

(30) Priorität: 06.05.2020 DE 102020112191
(43) Veröffentlichungstag der Anmeldung: 15.03.2023
(73) Patentinhaber: Krones Aktiengesellschaft, 93073 Neutraubling (DE)
(72) Erfinder: KOLB, Herbert, 93073 Neutraubling (DE)
(74) Vertreter: Grünecker Patent- und Rechtsanwälte PartG mbB
(86) Internationale Anmeldenummer: PCT/EP2021/060615
(87) Internationale Veröffentlichungsnummer: WO 2021/224020

(56) Entgegenhaltungen:
- EP-A2- 2 251 269
- DE-A1- 102008 059 229

## Beschreibung

Die vorliegende Erfindung betrifft eine Behälterbehandlungsmaschine gemäß Anspruch 1 sowie ein Verfahren zum Ausrichten eines Behälters in einer Behälteraufnahme einer Behälterbehandlungsmaschine gemäß Anspruch 7.

### Stand der Technik

Aus dem Stand der Technik ist es bekannt, dass Behälter, beispielsweise nachdem sie eine Reinigungsmaschine oder eine Blasformmaschine verlassen und einer Maschine zugeführt werden, in der sie mit definierter Ausrichtung angelangen müssen, ausgerichtet werden, bevor sie der eigentlichen Behandlung in der nachgeordneten Behälterbehandlungsmaschine zugeführt werden können.

Die gewünschte Ausrichtung, auch Zielstellung genannt, kann beispielsweise von bestimmten physischen Merkmalen der Oberfläche des Behälters, wie Formnähten, Einkerbungen oder Auswölbungen oder ähnlichem abhängen.

Aus der EP 2 251 269 sowie der DE 10 2011 007 520 sind Verfahren bekannt, mit denen durch die Aufnahme eines Behälters mittels einer Kamera bei vollständiger Umdrehung oder zumindest bei einer so langanhaltenden Drehung, bis ein Ausstattungsmerkmal erkannt wird, eine Ausrichtung des Behälters realisiert wird. Auf der Grundlage eines erfassten Ausstattungsmerkmals wird dabei der Behälter derart gedreht, dass er in die Zielstellung verbracht werden kann. Hierzu ist jedoch eine genaue Kenntnis der Oberfläche des Behälters und das Erkennen eines solchen spezifischen Ausstattungsmerkmals erforderlich.

Überdies ist es notwendig, dass die spezifische Zielstellung von einem Benutzer vorgegeben wird. Dies erfordert eine erhebliche Erfahrung des Benutzers, da durch geringfügig falsche Angabe der tatsächlichen Zielstellung relativ zu beispielsweise einem Druckkopf eine maßgebliche Beeinträchtigung des Ergebnisses des Drucks auftreten kann.

Überdies ist das in den beschriebenen Dokumenten angegebene Verfahren nicht dazu geeignet, aus einer Reihe von bereits untersuchten und ausgerichteten Behältern Schlüsse für zukünftige Behälter zu ziehen oder sogar bisher nicht verarbeitete Ausrichtmerkmale zu berücksichtigen, sodass stets eine vollständige Untersuchung des Behälters notwendig ist.

Dies sorgt dafür, dass die Effizienz des Verfahrens im bekannten Stand der Technik nur bis zu einer im Wesentlichen durch die Fähigkeiten des Bedieners festgelegten Grenze gesteigert werden kann.

DE 10 2008 059 229 A1 offenbart ein Verfahren zum Ausrichten von Behältern unter Nutzung eines neuronalen Netzwerks.

### Aufgabe

Ausgehend vom bekannten Stand der Technik besteht die zu lösende Aufgabe darin, ein Verfahren und eine Behälterbehandlungsmaschine zum Ausrichten eines Behälters vor der Durchführung eines Behandlungsschrittes an dem Behälter anzugeben, das mit hoher Zuverlässigkeit und geringem Aufwand für den Bediener die Ausrichtung des Behälters realisieren kann, wobei das Verfahren möglichst zuverlässig auch auf Abwandlungen von Ausrichtmerkmalen reagiert.

### Lösung

Diese Aufgabe wird erfindungsgemäß durch die Behälterbehandlungsmaschine gemäß Anspruch 1 sowie das Verfahren zum Ausrichten eines Behälters in einer Behälteraufnahme einer Behälterbehandlungsmaschine gemäß Anspruch 7 gelöst. Vorteilhafte Weiterbildungen der Erfindung sind in den Unteransprüchen erfasst.

Die erfindungsgemäße Behälterbehandlungsmaschine zum Behandeln von Behältern, wie Flaschen, Dosen oder dergleichen ist dadurch gekennzeichnet, dass das Ausrichtmodul ein neuronales Netz umfasst, das durch Verarbeiten des Bildes eines in einer Behälteraufnahme stromauf der Behandlungseinheit transportierten Behälters eine nötige Drehung des Behälters von seiner aktuellen Position zur Zielstellung bestimmen kann und das Ausrichtmodul die Drehung der Behälteraufnahme in Abhängigkeit von der bestimmten Drehung steuern kann.

Die Zielstellung ist erfindungsgemäß die Ausrichtung des Behälters, unter der der Behälter behandelt werden soll. Die Behandlung des Behälters kann dabei beispielsweise das Aufbringen eines Dekorationselements oder ein Inspektionsvorgang oder ähnliches sein, wobei die Behandlung im Wesentlichen von der korrekten Ausrichtung des Behälters abhängt. Die Zielstellung kann dabei insbesondere durch ein Ausrichtmerkmal auf der Oberfläche des Behälters in Form einer physischen Charakteristik festgelegt sein. Beispielsweise kann vorgesehen sein, dass ein Etikett beginnend an einer Formnaht des Behälters um den Behälter herum aufgewickelt wird. Dazu muss der Behälter mit der Formnaht aber in für das Etikettieraggregat geeignete Position verfahren werden, sodass die geeignete Position der Formnaht die Zielstellung definiert.

Die aktuelle Position des Behälters ist die Position, die der Behälter einnimmt, bevor seine Ausrichtung erfolgt und bevor er der Behandlung in der Behandlungseinheit unterzogen wird, sodass ein Ausrichten des Behälters von seiner aktuellen Position zur Zielstellung noch vor Beginn der Behandlung möglich wird.

Daraus ergibt sich die notwendige Drehung als der Differenzwinkel zwischen der aktuellen Ausrichtung und der Zielstellung.

Dabei ist erfindungsgemäß das neuronale Netz bevorzugt aufgrund von Mustererkennung in der Lage, die aktuelle Position mit der Zielstellung zu vergleichen, beispielsweise indem bestimmte Oberflächencharakteristika von dem neuronalen Netz erkannt werden und in eine Erkennung einer aktuellen Position verglichen mit der Zielstellung übersetzt werden.

Der durch das neuronale Netz und/oder das Ausrichtmodul bestimmte Differenzwinkel kann dann benutzt werden, um durch das Ausrichtmodul die Drehung der Behälteraufnahme zu steuern, wobei das Erkennen der nötigen Drehung durch das neuronale Netz robust auch bei geringen Abweichungen von Form/Farbe/Größe der Behälter ist und weiterhin wenig zusätzliche Eingaben durch den Bediener benötigt.

Die Behälterbehandlungsmaschine und insbesondere die Verwendung eines neuronalen Netzes kann vorteilhaft auch bei der Bestimmung einer notwendigen Drehung eingesetzt werden, wenn die Behälter, die gedreht werden sollen, Prägungen im Material aufweisen, wie etwa in Glas oder Kunststoff eingeprägte Elemente, wie Wappen, Symbole, Logos oder dergleichen, insbesondere solche mit einem "hand-crafted" Erscheinungsbild, die also aussehen, als wären sie manuell geprägt worden. Aufgrund der Transparenz des Materials des Behälters und der nicht konstanten Formgebung solcher Prägungen sind diese mit üblichen Bildverarbeitungsprogrammen nur schwer und unzuverlässig zu identifizieren.

Durch Verwendung eines neuronalen Netzes mit den erfindungsgemäßen Eigenschaften kann die Bestimmung der notwendigen Drehung des Behälters etwa auch mit Hinblick auf eine solche Prägung oder basierend auf einer solchen Prägung erfolgen. Unabhängig von der Drehung ist es mit dem neuronalen Netz möglich, die Prägung am Behälter zu erkennen, um etwa, unabhängig von der durchzuführenden Drehung, weitere Informationen etwa über die Qualität der Prägung zu gewinnen.

Weiterhin können mit der erfindungsgemäßen Behälterbehandlungsmaschine durch die Verwendung eines lernenden neuronalen Netzes sich über die Zeit geringfügig verändernde Charakteristika der Behälter, etwa sich verändernde Form der Formnähte aufgrund von Verschleiß der Blasformen, Berücksichtigung finden. Ein besonderer Vorteil der neuronalen Netze liegt darin, dass sie über die Zeit lernen können und damit flexibel auch sich (etwa im Rahmen von Verschleiß innerhalb einer gewissen Toleranzgrenze) ändernde Eigenschaften der Behälter dennoch zuverlässig zur Bestimmung der notwendigen Drehung verwenden können.

Es kann vorgesehen sein, dass das neuronale Netzwerk ein Deep Neural Network (DNN) oder ein Convolutional Neural Network ist. Deep Neuronal Networks und insbesondere Convolutional Neuronal Networks sind für die Mustererkennung von Bildern und/oder Oberflächen besonders gut geeignet, sodass mit ihnen eine Erkennung der aktuellen Positionen, insbesondere eines oder mehrerer Ausrichtmerkmale auf der Oberfläche des Behälters, zum Feststellen der notwendigen Drehung besonders gut erkannt werden können, was die Ausrichtung des Behälters in seine Zielstellung weiter verbessert.

Weiterhin ist das neuronale Netzwerk ausgebildet, aus während dem Betrieb der Behälterbehandlungsmaschine gewonnenen Bildern aktuelle Positionen von Behältern in Relation zu einer Zielstellung zu lernen.

Beispielsweise kann das neuronale Netz aus einem ersten Versuch, die Ausrichtung des Behälters und die notwendige Drehung zu ermitteln, lernen, wenn die durchgeführte Drehung nicht zur korrekten Ausrichtung des Behälters geführt hat, indem beispielsweise nach der Drehung ein zweites Bild des Behälters aufgenommen wird und das neuronale Netz untersucht, ob die Zielstellung erreicht wurde. Ist dies nicht der Fall und muss die Zielstellung korrigiert werden, kann dies durch geeignete Gestaltung des neuronalen Netzes zu einem Lernprozess führen, der die Erkennung der aktuellen Position und die Bestimmung der notwendigen Drehung laufend mit dem Betrieb der Maschine verbessert.

In einer Ausführungsform ist die Zielstellung anhand eines Ausrichtmerkmals des Behälters festgelegt.

Wie bereits oben beschrieben, kann es sich bei dem Ausrichtungsmerkmal insbesondere um eine physische Charakteristik, wie eine Formnaht oder eine materielle Auswölbung oder materielle Einbuchtung handeln, die maßgeblich für die weitere Behandlung des Behälters, beispielsweise das Aufbringen eines Etiketts oder eines Druckbildes, sein kann.

So kann die Zielstellung auf einfache geometrische Weise bestimmt sein.

In einer Weiterbildung dieser Ausführungsform umfasst die Behälterbehandlungsmaschine eine Eingabeeinheit, mit der ein Bediener einen Behältertyp und/oder einen Typ eines Ausrichtmerkmals eingeben kann, anhand dessen das neuronale Netzwerk die Zielstellung ermitteln kann.

Mit dieser Ausführungsform ist es einem Bediener auf einfache Weise möglich, das gewünschte Ergebnis der Drehung festzulegen, etwa die Zielstellung, ohne dass hierfür eine genaue Eingabe durch den Bediener oder gar die Angabe einer genauen Winkelstellung bezüglich einer bevorzugten Nullstellung des Behälters erfolgen muss. Beispielsweise kann die Eingabe so gestaltet sein, dass der Bediener zwischen unterschiedlichen Typen von Ausstattungsmerkmalen, wie Formnaht, Materialauswölbung, Materialeinwölbung, Kerben, Punkten auswählen kann und die Eingabe dieses Begriffs als Ausrichtmerkmal genügt, um der Behälterbehandlungsmaschine die notwendigen Informationen mitzuteilen, die dann im Wesentlichen selbstständig von dem Ausrichtmodul und dem neuronalen Netz in eine korrekte Ausrichtung der Behälter überführt werden.

Ferner kann die Behälterbehandlungsmaschine wenigstens eines von einer Etikettiermaschine, einer Druckmaschine, einer Direktdruckmaschine eine Inspektionsmaschine, einem Verpacker umfassen. Bei diesen Maschinen kommt es üblicherweise auf die Ausrichtung des Behälters in eine bestimmte Zielstellung an, sodass die Implementierung der Erfindung in diesen Maschinen besonders vorteilhaft ist.

Es kann auch vorgesehen sein, dass die Behälteraufnahme einen Drehteller und eine (drehbare) Zentrierglocke umfasst, wobei ein Behälter zwischen dem Drehteller und der (drehbaren) Zentrierglocke eingespannt und gedreht werden kann. Mit dieser Ausgestaltung der Behälteraufnahme ist ein effektives und steuerungstechnisch einfaches Drehen der Behälter möglich.

Es kann weiterhin vorgesehen sein, dass der Behälter mittels einer (um eine Achse parallel zur Längsachse des Behälters) drehbaren Zentrierglocke (etwa einer durch einen Servomotor in Drehung versetzbaren Zentrierglocke) transportiert wird und vor der/den Kamera/s gedreht wird. Die Behälter können so hängend transportiert werden, was auch den Boden ohne Störung für die Betrachtung durch die Kamera freigibt.

Das erfindungsgemäße Verfahren zum Ausrichten eines Behälters in einer Behälteraufnahme einer Behälterbehandlungsmaschine, wobei der Behälter in eine Zielstellung ausgerichtet wird, ist dadurch gekennzeichnet, dass das Ausrichtmodul ein neuronales Netz umfasst, das durch Verarbeiten des Bildes des in einer Behälteraufnahme stromauf der Behandlungseinheit transportierten Behälters eine nötige Drehung des Behälters von seiner aktuellen Position zur Zielstellung bestimmt und das Ausrichtmodul die Drehung der Behälteraufnahme in Abhängigkeit von der bestimmten Drehung steuert.

Gemäß dem erfindungsgemäßen Verfahren ist vorgesehen, dass die Drehung des Behälters in die Zielstellung erfolgt, bevor die Behandlung in der Behandlungseinheit stattfindet. Dies bedeutet nicht zwangsläufig, dass die Drehung des Behälters in die Zielstellung auch vor Erreichen der Behandlungseinheit stattfindet. Die Drehung des Behälters kann auch erfolgen, während der Behälter schon in Wirkreichweite der Behandlungseinheit positioniert ist, die Behandlungseinheit die Behandlung aber noch nicht begonnen hat.

Dieses Verfahren realisiert eine einfache wenn auch zuverlässige Ausrichtung des Behälters.

In einer Ausführungsform ist das neuronale Netz ein vorgelerntes neuronales Netz.

Durch das Vorlernen des neuronalen Netzes, also das Trainieren des neuronalen Netzes auf ein oder mehrere Ausrichtmerkmale und Zielstellungen von Behältern bzw. Behältertypen wird sichergestellt, dass sogar bei Inbetriebnahme der Behälterbehandlungsmaschine ein im Wesentlichen vollständig korrektes Ausrichten der Behälter in die Zielstellung ausgehend von einer beliebigen Position möglich ist.

Ferner kann das neuronale Netz ausgebildet sein, aus während des Betriebs der Behälterbehandlungsmaschine aufgenommenen Bildern von Behältern aktuelle Positionen von Behältern in Relation zu einer Zielstellung zu lernen.

Selbst bei einem vorgelernten neuronalen Netz kann diese Ausführungsform dazu führen, dass die Mustererkennung der Oberfläche des Behälters und damit die weitere Verarbeitung, wie Bestimmung der notwendigen Drehung, sich über die Betriebsdauer weiter verbessert. Damit können Fehler weiter minimiert werden.

In einer Ausführungsform umfasst die Behälterbehandlungsmaschine eine Eingabeeinheit, mit der ein Bediener einen Behältertyp und/oder einen Typ eines Ausrichtmerkmals eingibt, und wobei anhand des eingegebenen Behältertyps und/oder des eingegebenen Ausrichtmerkmals das neuronale Netzwerk die Zielstellung ermittelt.

Durch diese Ausführungsform wird in wenig fehleranfälliger Weise eine Möglichkeit geschaffen, die Behälterbehandlungsmaschine und insbesondere das Ausrichtmodul und das neuronale Netz mit der notwendigen Information zum Bestimmen der Zielstellung und der notwendigen Drehung auszustatten.

In einer Ausführungsform ist vorgesehen, dass das neuronale Netz zum Bestimmen der Drehung in genau einem Bild des Behälters in seiner aktuellen Position in einem ersten Schritt ein Ausrichtmerkmal, anhand dessen die Zielstellung des Behälters definiert ist, sucht und, wenn das Ausrichtmerkmal zumindest teilweise in dem Bild des Behälters gefunden wird, aus der Position des Ausrichtmerkmals in dem Bild und der Zielstellung des Ausrichtmerkmals die Drehung bestimmt; und wobei das neuronale Netz in einem zweiten Schritt, falls das Ausrichtmerkmal in dem genau einen Bild nicht zumindest teilweise gefunden wird, anhand der in dem Bild vorhandenen Informationen eine mögliche Lage des Ausrichtmerkmals bestimmt und das Ausrichtmodul anhand der möglichen Lage des Ausrichtmerkmals eine Drehung des Behälters in der Behälteraufnahme bewirkt, wobei in einem dritten Schritt ein zweites Bild eines Behälters in der gedrehten Position aufgenommen wird und das neuronale Netz das Ausrichtmerkmal in dem zweiten Bild sucht und, wenn das Ausrichtmerkmal zumindest teilweise in dem Bild des Behälters gefunden wird, aus der Position des Ausrichtmerkmals in dem Bild und der Zielstellung des Ausrichtmerkmals die Drehung bestimmt.

Mit dieser Ausführungsform wird eine "Selbstkorrektur" des neuronalen Netzes realisiert, da das neuronale Netz das von ihm bestimmte Ergebnis im zweiten und dritten Schritt überprüfen und beispielsweise bei einem sich anschließenden erneuten ersten Schritt das erste Ergebnis korrigieren kann. Dies kann in Kombination mit einem Lernprozess des neuronalen Netzes vorteilhaft zur Verbesserung des Verfahrens zur Ausrichtung der Behälter beitragen.

In einer Weiterbildung dieser Ausführungsform lernt das neuronale Netz aus einem Ergebnis des zweiten Schritts und des dritten Schritts. Hiermit wird der oben diskutierte Vorteil realisiert.

### Kurze Beschreibung der Figuren

- Fig. 1: zeigt eine Behälterbehandlungsmaschine gemäß einer Ausführungsform
- Fig. 2: zeigt die Verarbeitung eines aufgenommenen Bildes eines Behälters zum Bestimmen des Drehwinkels gemäß einer Ausführungsform
- Fig. 3: zeigt eine Ausführungsform eines Trainingsverfahrens für ein neuronales Netz

### Ausführliche Beschreibung

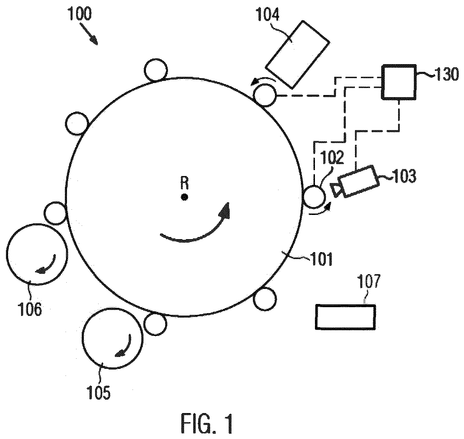

Fig. 1 zeigt eine Behälterbehandlungsmaschine 100 gemäß einer Ausführungsform der Erfindung. Diese Behälterbehandlungsmaschine kann beispielsweise als Etikettiermaschine oder Direktdruckmaschine ausgebildet sein. Die Erfindung ist jedoch hinsichtlich der spezifischen Wahl der Behälterbehandlungsmaschine 100 bzw. ihrer Ausgestaltung nicht beschränkt. Einzig ist vorgesehen, dass die Behälterbehandlungsmaschine eine solche Behälterbehandlungsmaschine ist, die eine bestimmte Ausrichtung eines Behälters erfordert, bevor dieser mit einer Behandlungseinheit 104 behandelt wird.

Beispielsweise kann es für das Aufbringen von Etiketten mittels einer als Etikettieraggregat ausgebildeten Behandlungseinheit 104 angedacht sein, dass die eine Seite des Etiketts an einer Formnaht eines Kunststoffbehälters, etwa aus PET, angelegt wird und der Rest des Etiketts ausgehend davon um den Behälter zumindest teilweise gewickelt wird. Die Behälter werden einer solchen Etikettiermaschine aber üblicherweise unausgerichtet zugeführt, sodass eine nachträgliche Ausrichtung erforderlich ist, bevor das Etikett aufgebracht wird.

Dies gilt auch für andere Realisierungen von Behälterbehandlungsmaschinen, wobei auch Inspektionsmaschinen hierunter fallen.

Grundsätzlich ist vorgesehen, dass die Behälterbehandlungsmaschinen neben einer Behandlungseinheit auch eine Behälteraufnahme 102 umfasst. Durch diese Behälteraufnahme können Behälter etwa aus einer Zuführeinrichtung 105 entnommen und insbesondere in den Wirkbereich der Behandlungseinheit 104 überführt werden, in dem die Behandlung des Behälters (beispielsweise das Aufbringen des Etiketts oder das Bedrucken des Behälters mit einem Druckbild) durchgeführt wird.

Gemäß einer Ausführungsform ist vorgesehen, dass der Behälter zumindest vor dem Beginn des eigentlichen Behandlungsschrittes mit der Behandlungseinheit 104 in die Zielstellung (also in die gewünschte Position des Behälters) gedreht wird, wobei er bevorzugt um seine Längsachse gedreht wird.

Die Längsachse ist dabei die Achse entlang der längsten Ausdehnung des Behälters und erstreckt sich insbesondere von einem Boden des Behälters, auf dem der Behälter üblicherweise steht, in Richtung der Öffnung des Behälters. Die Behälteraufnahme kann beispielsweise einen Drehteller und eine diesem zugeordnete Zentrierglocke umfassen, zwischen denen der Behälter eingespannt wird. Dies ist insbesondere für Kunststoffflaschen oder Dosen bekannt. Die Erfindung ist jedoch diesbezüglich nicht beschränkt und auch andere Varianten zum Transportieren und/oder Drehen des Behälters, beispielsweise mit Neckhandling-Apparaturen, die den Behälter an seinem Tragringreifen umdrehen können, sind hier denkbar.

Um den Behälter in die gewünschte Zielstellung zu bewegen, muss die aktuelle Ausrichtung des Behälters bekannt sein, sodass ermittelt werden kann, um wie weit der Behälter um seine Achse gedreht werden muss. Dazu ist vorgesehen, dass die Behälterbehandlungsmaschine eine Aufnahmeeinrichtung, insbesondere eine Kamera 103 umfasst, mit der zumindest ein Bild des Behälters aufgenommen werden kann, während dieser sich in seiner aktuellen Position bzw. Ausrichtung befindet.

Dieses aufgenommene Bild wird dann von der Kamera einem Ausrichtmodul 130 zugeleitet. Dieses Ausrichtmodul kann im Sinne einer Steuereinheit verstanden werden oder eine Steuereinheit zumindest umfassen und ist ausgebildet, das aufgenommene Bild des Behälters zu verarbeiten, um die notwendige Drehung des Behälters ausgehend von seiner aktuellen Position zur Zielstellung zu ermitteln. Weiterhin ist das Ausrichtmodul bevorzugt ausgebildet, in Abhängigkeit der so bestimmten notwendigen Drehung die Drehung der Behälteraufnahme zu steuern, indem beispielsweise ein Servoantrieb der Behälteraufnahme angesteuert und zum Drehen des Behälters in der Behälteraufnahme um einen bestimmten Winkel zu veranlasst wird.

Erfindungsgemäß umfasst das Ausrichtmodul ein neuronales Netz, das das durch die Kamera 103 aufgenommene Bild (oder ein irgendwie vorverarbeitetes Bild, wie weiter unten beschrieben wird) verarbeitet und durch diese Verarbeitung, insbesondere eine Mustererkennung, die aktuelle Position des Behälters erkennt und ausgehend davon die notwendige Drehung bestimmt.

Dabei wird die notwendige Drehung gemäß einer Ausführungsform letztlich durch die Lage eines bestimmten Ausrichtmerkmals auf der Oberfläche des Behälters in seiner aktuellen Position verglichen mit der Lage dieses Ausrichtmerkmals in der Zielstellung bestimmt.

Das neuronale Netz ist erfindungsgemäß derart trainiert, dass es durch Bilderkennung bzw. Mustererkennung die aktuelle Lage des Ausrichtmerkmals oder eine andere Struktur des Behälters, die Rückschlüsse auf die aktuelle Position des Ausrichtmerkmals erlaubt, erkennt und daraus die notwendige Drehung des Behälters ableitet, um das Ausrichtmerkmal in die gewünschte Lage zu bringen.

Das Ausrichtmerkmal kann, wie bereits oben erwähnt, etwa eine Formnaht sein. Aber auch andere physische Charakteristika des Behälters, wie beispielsweise die Lage von Materialauswölbungen oder Einwölbungen, Embossings, bestimmten Markierungen (die beispielsweise bereits in einem vorangegangenen Schritt durch digitale Drucktechniken aufgebracht wurden) oder Ähnliches sind hier denkbar. Die Erfindung ist diesbezüglich nicht beschränkt. Jedoch muss es ganz grundsätzlich möglich sein, aufgrund von physischen Eigenschaften des Behälters durch Aufnahme eines Bildes des Behälters die aktuelle Position des Behälters zu bestimmen und sie mit einer Zielstellung zu vergleichen.

Ist die notwendige Drehung bzw. der notwendige Drehwinkel bestimmt, um den Behälter aus seiner aktuellen Position in die Zielstellung zu drehen, in der das Ausrichtmerkmal die gewünschte Lage besitzt, steuert das Ausrichtmodul, wie bereits oben erwähnt, die betreffende Behälteraufnahme oder eine geeignete Einrichtung zum Drehen des Behälters derart, dass der Behälter aus seiner aktuellen Position in die Zielstellung verbracht wird. Hier kann dann die Behandlung durch die Behandlungseinheit 104 erfolgen.

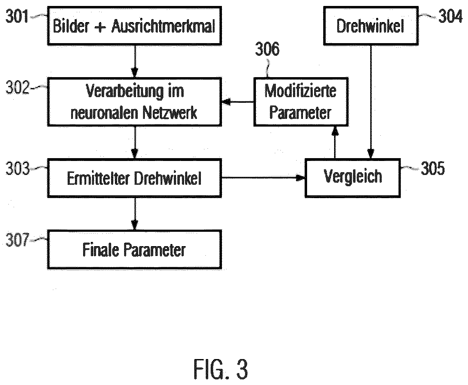

In der Fig. 1 ist ebenfalls ein Bedienterminal 107 dargestellt. Dieses Bedienterminal erlaubt dem Bediener eine Interaktion mit der Behälterbehandlungsmaschine und kann beispielsweise als Steuereinheit der gesamten Behälterbehandlungsmaschine dienen. Während das Bedienterminal 107 hier separat zum Ausrichtmodul 130 dargestellt ist, kann auch vorgesehen sein, dass das Ausrichtmodul insbesondere zusammen mit dem neuronalen Netz in der Steuereinheit bzw. dem Bedienterminal 107 integriert ist. Über das Bedienterminal 107 kann ein Bediener bevorzugt der Behälterbehandlungsmaschine und insbesondere dem Ausrichtmodul Informationen hinsichtlich des Behältertyps und/oder eines Typs eines Ausrichtmerkmals oder einer physischen Charakteristik, in Abhängigkeit von welcher das neuronale Netz die aktuelle Position und die Zielstellung bestimmen soll, mitteilen. Dies kann durch Auswahl von Ausrichtmerkmalen und/oder Behältertypen aus einer Liste erfolgen und ist für den Bediener daher einfach möglich, sodass die Fehleranfälligkeit hier reduziert wird. Es kann auch möglich sein, dass der Bediener hier neue bisher vom neuronalen Netz bzw. dem Ausrichtmodul nicht verarbeitete Behälter als Behältertyp auswählt. In diesem Fall kann vorgesehen sein, dass ein Trainingsprozess eingeleitet wird, bei dem beispielsweise neue Ausrichtmerkmale oder der allgemeine Behältertyp vom neuronalen Netz gelernt werden, wie dies mit Bezug auf Fig. 3 beschrieben wird.

In der in Fig. 1 dargestellten Ausführungsform ist lediglich eine Kamera 103 vorgesehen. Die hier dargestellte Behälterbehandlungsmaschine ist als ein Karussell 101 ausgebildet und mit entlang seiner Peripherie angeordneten Behälteraufnahmen ausgestattet. Um ein aktives Lernen des neuronalen Netzes auch während des Betriebs der Behälterbehandlungsmaschine zu realisieren, kann vorgesehen sein, dass entlang der Drehrichtung des Karussells nach der Kamera 103 aber vor der Behandlungseinheit 104 eine weitere Kamera angeordnet ist, die bevorzugt nach der Drehung des Behälters von seiner aktuellen Position in die vermeintliche Zielstellung, wie sie vom neuronalen Netz bestimmt wurde, ein weiteres Bild des Behälters in der "neuen" aktuellen Position aufnimmt. Um dem neuronalen Netz die Möglichkeit zu geben, während des Betriebs der Behälterbehandlungsmaschine zu lernen, kann in einer Ausführungsform vorgesehen sein, dass dieses neue Bild vom neuronalen Netz des Ausrichtmoduls 130 erneut verarbeitet wird und geprüft wird, ob etwa ein bestimmtes Ausrichtmerkmal, das nach der ersten Drehung eigentlich in der Zielstellung positioniert sein sollte, auch tatsächlich in der Zielstellung zu finden ist. Ist dies der Fall, kann das neuronale Netz aus diesem Verarbeiten des zweiten Bildes lernen, dass die vorher bestimmte Drehung korrekt war. Ist dies nicht der Fall, lernt das neuronale Netz auch hieraus und versucht eine erneute Drehung des Behälters, um die Zielstellung zu erreichen.

Bei einem bereits vortrainierten neuronalen Netz wird es erwartungsgemäß so sein, dass die eventuell auftretenden Abweichungen von der eigentlichen Zielstellung so minimal sind, also durch eine geringfügige zweite Drehung mit sehr hoher Wahrscheinlichkeit der Behälter korrekt in seiner Zielstellung positioniert ist, um durch die Behandlungseinheit entsprechend behandelt zu werden. Da durch den Lernprozess das neuronale Netz üblicherweise mit fortschreitender Zeit während des Betriebs der Behälterbehandlungsmaschine immer zuverlässiger arbeitet, kann die zusätzliche, hier nicht dargestellte Kamera auch beispielsweise nur während einer Anfangszeit, beispielsweise über die erste Woche, des Betriebs der Behälterbehandlungsmaschine bereitgestellt sein. Alternativ oder zusätzlich kann eine solche zusätzliche Kamera auch bereitgestellt werden, wenn eine neue Behältersorte, die von dem neuronalen Netz bisher nicht verarbeitet wurde, durch die Behälterbehandlungsmaschine behandelt werden soll. Bei einem hinreichend vortrainierten neuronalen Netz ist es möglich, dass das neuronale Netz die neue Art von Behälter bzw. den neuen Behältertyp, bei Angabe des zur Identifizierung dienenden Ausrichtmerkmals bereits im Wesentlichen korrekt dreht. Um auch hier die Qualität zu verbessern, kann die zweite Kamera eingesetzt werden, um dem neuronalen Netz ein Lernen zu ermöglichen.

Bei dem neuronalen Netz handelt es sich bevorzugt um ein Deep Neuronal Network und besonders bevorzugt um ein Convolutional Neuronal Network. Diese Netzwerke sind im Rahmen der Mustererkennung von Bildern besonders gut geeignet und können daher vorteilhaft für die Erfindung verwendet werden.

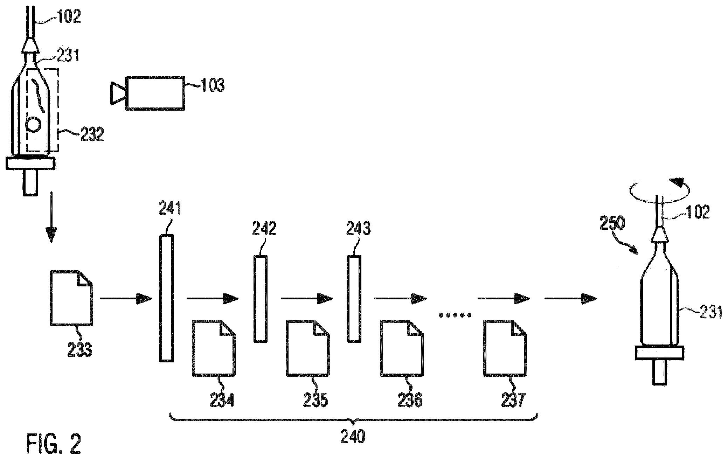

Die Fig. 2 zeigt eine lediglich schematische Darstellung einer Bildverarbeitung in einem Convolutional Neuronal Network zur Bestimmung der aktuellen Position eines Behälters und der Ableitung eines entsprechenden Drehwinkels.

Fig. 2 stellt dieses Verfahren im Wesentlichen in Form eines Fließschemas mit schematischer Darstellung des Behälters und der Kamera dar, ist aber ganz grundsätzlich als Verfahrensablauf innerhalb des neuronalen Netzes zu verstehen.

Zunächst werden durch die Kamera 103, wie bereits mit Bezug auf die Fig. 1 beschrieben, ein oder mehrere Bilder des Behälters 231, aufgenommen. Vorzugsweise wird dabei der Behälter vor der Kamera über einen Winkel von 360° (also einer vollen Drehung) gedreht und Bilder des Behälters aufgenommen. Insbesondere kann vorgesehen sein, dass der Behälter im Aufnahmebereich der Kamera (auch Sichtfeld der Kamera genannt), in dem ein Bild von dem Behälter aufgenommen wird, gedreht wird, während mehrere Bilder 232 des Behälters durch die Kamera aufgenommen werden. Beispielsweise können die Bilder bei bestimmten Drehwinkeln relativ zur Ausgangslage, etwa beginnend bei 0° und dann jeweils bei einer Drehung um 90° (also 90°, 180°und 270°) aufgenommen werden. Auch andere Drehwinkel, wie eine Aufnahme alle 45° bei der Drehung sind denkbar. Bevorzugt wird der Behälter mindestens so weit vor der Kamera gedreht, bis das zu identifizierende Erkennungsmerkmal mindestens einmal abgebildet werden kann.

Bevorzugt werden die Bilder mit den Mitteln üblicher Bildverarbeitung entzerrt und/oder bearbeitet (etwa die Schärfte oder der Kontrast geändert) und/oder können in einer Ausführungsform zu einem Panoramabild zusammengesetzt werden.

Diese Bilder 232 werden dann in Form einer geeigneten Datei, etwa einer Bilddatei 233 dem Ausrichtmodul und hier insbesondere dem neuronalen Netz 240 zur Verfügung gestellt, das in der hier dargestellten Ausführungsform als Convolutional Neuronal Network ausgestaltet ist.

Ein Convolutional Neuronal Network verarbeitet Bilder durch schrittweises Multiplizieren einer Matrix, die das Bild darstellt, mit einer kleineren Matrix, wobei jeweils das Punktprodukt gebildet wird. Die kleinere Matrix wird häufig als "kernel" bezeichnet und wird nachfolgend mit K abgekürzt.

Dies lässt sich wie folgt verstehen. Eine Matrix M der Größe S x T dient als Ausgangspunkt und wird mit der Matrix K mit der Größe P x Q (PCS,QCT) multipliziert, wobei beginnend mit dem ersten Eintrag der Matrix M das innere Produkt einer Untermatrix U (der Größe P x Q) der Bildmatrix M mit der Matrix K gebildet wird. Danach werden die Indizes der Anfangseinträge für das Bilden des inneren Produktes um 1 erhöht (beispielsweise nur die Spalten und/oder nur die Zeilen) und erneut das innere Produkt mit der sich dann ergebenden Untermatrix bestimmt. Diese inneren Produkte ergeben jeweils genau eine Zahl. Wird diese Zahl zusammen mit den übrigen inneren Produkten als neue Matrix dargestellt, indem jeweils die entsprechenden Indizes verwendet werden, die zum Bestimmen des inneren Produkts genutzt wurden, so ergibt sich eine neue, reduzierte Matrix R, die verglichen mit der Ausgangsgröße der ursprünglichen Matrix M (S x T) nun die Größe (S - P+1) x (T - Q+1) besitzt. Sei dies die Matrix R, dann haben ihre Einträge Rᵢⱼ jeweils den Wert des entsprechenden inneren Produkts, das von der Ausgangsmatrix bzw. Bildmatrix M und der Matrix K ergeben.

Die Werte der Einträge der Matrix K sowie die Größen P und Q der Matrix K sind letztlich Parameter des neuronalen Netzes und wurden üblicherweise durch Trainingsverfahren, beispielsweise anhand von bereits bekannten Bildern, trainiert. Diese Parameter sind es auch, die entsprechend der vorangegangenen Ausführungsform bei nochmaligem Vermessen des bereits gedrehten Behälters trainiert werden können.

Ein Convolutional Neuronal Network, wie es in Fig. 2 dargestellt ist, umfasst üblicherweise mehrere Schichten 241-243 (und weitere hier nicht separat dargestellte Schichten), die jeweils eine entsprechende Transformation der ihnen eingegebenen Matrix mit einer entsprechenden Matrix K durchführen.

Entsprechend wird das ursprünglich eingegebene Bild 233 durch die Schichten 241-243 des neuronalen Netzes weiterverarbeitet und es entstehen jeweils "Zwischenbilder" 234-236 und am Ende des Verfahrens im Convolutional Neuronal Network ein finales reduziertes Bild 237.

Dieses finale Bild 237 erlaubt letztlich einen Rückschluss auf das Vorhandensein oder Nichtvorhandensein und die genaue Position eines entsprechenden Ausrichtmerkmals, auf dessen Erkennung das neuronale Netz trainiert wurde. Im Sinne der Erfindung handelt es dabei um ein Ausrichtmerkmal oder eine andere physische Charakteristik des Behälters. Das reduzierte Bild 237 umfasst nun entsprechend des Durchlaufs durch die Schichten des neuronalen Netzes eine reduzierte Größe. Es kann jedoch, beispielsweise auch wieder auf die Ausgangsgröße expandiert werden, um entsprechend der Mustererkennung im neuronalen Netz die tatsächliche Lage des Ausrichtmerkmals oder der physischen Charakteristik des Behälters im Bild festzustellen.

Dieses finale Bild 237 kann dann vom neuronalen Netz oder allgemein dem Ausrichtmodul genutzt werden, um die aktuelle Lager der physischen Charakteristik oder des Ausrichtmerkmals zu bestimmen, woraus dann durch Vergleich mit der Zielstellung die notwendige Drehung des Behälters abgeleitet werden kann.

Dazu kann virtuell eine Verschiebung des finalen Bildes 237 (also eine Drehung des Behälters in dem Bild) durchgeführt werden, bis das Ausrichtmerkmal hinsichtlich seiner Lage mit der Lage des Ausrichtmerkmals in der Zielstellung übereinstimmt. Die durchgeführte virtuelle Drehung ist dann die nötige Drehung des Behälters in der Behälteraufnahme, um ihn aus der aktuellen Position in die Zielstellung zu bewegen.

Nachdem in der Fig. 2 das finale Bild 237 bestimmt wurde, kann, wie bereits beschrieben, die aktuelle Position des Behälters bestimmt werden. Ist diese bestimmt, kann auch der notwendige Drehwinkel für den Behälter bestimmt werden, um ihn in die Zielstellung zu bringen (bzw. das Ausrichtmerkmal in der Zielstellung zu positionieren). In einem nächsten Schritt wird dann durch das Ausrichtmodul die Behälteraufnahme angesteuert, sodass im Schritt 250 eine Drehung des Behälters von seiner aktuellen Position in die Zielstellung erfolgt. Wie bereits beschrieben, kann hier auch vorgesehen sein, dass durch eine zweite Kamera eine nachträgliche Kontrolle erfolgt, ob der Behälter tatsächlich in der Zielstellung positioniert ist, wonach eine nachträgliche Korrektur ermöglicht wird und gleichzeitig ein weiteres Lernen des neuronalen Netzes ausgeführt werden kann.

Die Genauigkeit, mit der die notwendige Drehung bestimmt werden kann, hängt maßgeblich von dem Zustand des neuronalen Netzes und insbesondere dessen Training ab. Ein nicht ausreichend trainiertes neuronales Netz wird üblicherweise die Lage des Ausrichtmerkmals nicht mit hoher Genauigkeit bestimmen und daher bei der nachträglichen Bestimmung des notwendigen Drehwinkels auch diesen nicht korrekt bestimmen. Ebenso kann ein nicht ausreichend trainiertes neuronales Netz Merkmale der Oberfläche eines Behälters fälschlicherweise als das zu suchende Ausrichtmerkmal ansehen, was ebenfalls zu Fehlern bei der Bestimmung des Winkels führen wird.

Aus diesem Grund ist es notwendig, das neuronale Netz zu trainieren, bevor der Betrieb der Behälterbehandlungsmaschine aufgenommen wird. Vorteilhaft ist auch ein fortgesetztes Lernen während des Betriebs der Behälterbehandlungsmaschine, um eine stetige Verbesserung der Qualität der Ergebnisse des neuronalen Netzes zu bewirken.

Ein vor dem Betrieb der Behälterbehandlungsmaschine durchgeführtes Lernen, aber letztlich auch ein Lernen während des Betriebs der Behälterbehandlungsmaschine, läuft ganz grundsätzlich so ab, dass dem neuronalen Netz während einer Lernphase Bilder von Behältern zur Verarbeitung zur Verfügung gestellt werden. Dies können beispielsweise Bilder aus dem laufenden Betrieb sein, aber auch aus einer großen Datenbank entnommene Bilder, die zum Lernen des neuronalen Netzes (etwa vor Inbetriebnahme der Behälterbehandlungsmaschine) genutzt werden. Zusätzlich zu diesen Bildern wird dem neuronalen Netz mitgeteilt, nach welchem Ausrichtmerkmal bzw. welcher physischen Charakteristik auf der Oberfläche des Behälters gesucht werden soll. Zusätzlich kann eine Zielstellung bzw. Zielposition dieses Ausrichtmerkmals bzw. der physischen Charakteristik dem neuronalen Netz übergeben werden, sodass die Aufgabe des neuronalen Netzes darin besteht, den notwendigen Drehwinkel zu bestimmen.

Dies erfolgt im Schritt 301 entsprechend der Fig. 3.

Das neuronale Netz verarbeitet nun die ihm zur Verfügung gestellten Bilder, üblicherweise eines nach dem anderen, und bestimmt für jedes Bild die vermeintliche Lage des Ausrichtmerkmals und leitet daraus gegebenenfalls auch den notwendigen Drehwinkel ab. Dies erfolgt in den Schritten 302 und 303 gemäß der Fig. 3. Anstelle des zu ermittelnden Drehwinkels kann auch lediglich die genaue Bestimmung der Lage des Ausrichtmerkmals die Aufgabe des neuronalen Netzes sein. Anstelle der Feststellung des Drehwinkels in Schritt 303 wird dann das Ergebnis der Verarbeitung durch das neuronale Netz die Bestimmung der Lage des Ausrichtmerkmals sein.

Für ein Training eines neuronalen Netzes müssen die gewünschten Ergebnisse (im Rahmen der Ausführungsform der Fig. 3 also der zu ermittelnde Drehwinkel) bekannt sein, um einen Vergleich der Ergebnisse des neuronalen Netzes mit den richtigen Ergebnissen ziehen zu können. Daher werden in einem nächsten Schritt 305 der von dem neuronalen Netz ermittelte Drehwinkel und der tatsächliche Drehwinkel 304, der als weitere Eingabe zur Verfügung steht, miteinander verglichen. Dieser Vergleich kann beispielsweise in einer Differenzbildung oder gewichteten Vergleich des ermittelten und des tatsächlichen Drehwinkels liegen.

Aus diesem Vergleich kann im Rahmen eines Lernprozesses das neuronale Netz nun seine Parameter (die Größe der Matrizen K und/oder die Werte der darin enthaltenen Parameter) im Schritt 306 modifizieren. Mit diesen neuen Parametern wird nun das zuletzt verarbeitete Bild oder sämtliche zuletzt verarbeiteten Bilder erneut verarbeitet und der notwendige Drehwinkel ermittelt. Es erfolgt dann ein erneuter Vergleich im Schritt 305 mit dem tatsächlichen Drehwinkel 304 und die Parameter werden, falls notwendig, im Schritt 306 erneut modifiziert.

Dieses Verfahren wird üblicherweise solange durchgeführt, bis die Abweichung zwischen dem ermittelten Drehwinkel und dem tatsächlichen Drehwinkel für sämtliche Trainingsdaten eine gewisse Schwelle unterschreitet. Die dann erhaltenen Parameter werden im Schritt 307 als finale Parameter des neuronalen Netzes nach diesem Training verwendet, bis ein nächster Trainingszyklus des neuronalen Netzes, beispielsweise in einer Betriebspause der Behälterbehandlungsmaschine, durchgeführt wird.

## Patentansprüche

1. Behälterbehandlungsmaschine zum Behandeln von Behältern, wie Flaschen, Dosen oder dergleichen, die Behälterbehandlungsmaschine umfassend eine Behandlungseinheit zum Behandeln von Behältern und Behälteraufnahmen, in denen Behälter um eine Achse drehbar aufgenommen werden können, wobei die Behälterbehandlungsmaschine eine Kamera zum Aufnehmen eines Bildes eines in einer Behälteraufnahme stromauf der Behandlungseinheit transportierten Behälters und ein Ausrichtmodul umfasst, wobei das Ausrichtmodul ausgebildet ist, einen Behälter durch Ansteuern der Behälteraufnahme in eine Zielstellung zu drehen, **dadurch gekennzeichnet, dass** das Ausrichtmodul ein neuronales Netz umfasst, welches eingerichtet ist, durch Verarbeiten des Bildes eines in einer Behälteraufnahme stromauf der Behandlungseinheit transportierten Behälters eine nötige Drehung des Behälters von seiner aktuellen Position zur Zielstellung zu bestimmen, das Ausrichtmodul eingerichtet ist, die Drehung der Behälteraufnahme in Abhängigkeit von der bestimmten Drehung zu steuern und das neuronale Netzwerk ausgebildet ist, aus während des Betriebs der Behälterbehandlungsmaschine gewonnenen Bildern aktuelle Positionen von Behältern in Relation zu einer Zielstellung zu lernen.

2. Behälterbehandlungsmaschine nach Anspruch 1, wobei das neuronale Netzwerk ein Deep Neural Network (DNN) oder ein Convolutional Neural Network ist.

3. Behälterbehandlungsmaschine nach einem der Ansprüche 1 bis 2, wobei die Zielstellung anhand eines Ausrichtmerkmals des Behälters festgelegt ist.

4. Behälterbehandlungsmaschine nach Anspruch 3, wobei die Behälterbehandlungsmaschine eine Eingabeeinheit umfasst, mit der ein Bediener einen Behältertyp und/oder einen Typ eines Ausrichtmerkmals eingeben kann, anhand dessen das neuronale Netzwerk die Zielstellung ermitteln kann.

5. Behälterbehandlungsmaschine nach einem der Ansprüche 1 bis 4, wobei die Behälterbehandlungsmaschine wenigstens eines von einer Etikettiermaschine, einer Druckmaschine, einer Direktdruckmaschine, eine Inspektionsmaschine einem Verpacker umfasst.

6. Behälterbehandlungsmaschine nach einem der Ansprüche 1 bis 5, wobei die Behälteraufnahme einen Drehteller und eine drehbare Zentrierglocke umfasst, wobei ein Behälter zwischen dem Drehteller und der drehbaren Zentrierglocke eingespannt und gedreht werden kann.

7. Verfahren zum Ausrichten eines Behälters in einer Behälteraufnahme einer Behälterbehandlungsmaschine, wobei der Behälter in eine Zielstellung ausgerichtet wird, bevor ein Behandlungsschritt an dem Behälters mittels einer Behandlungseinheit der Behälterbehandlungsmaschine durchgeführt wird, wobei der Behälter von einer aktuellen Position zur Zielstellung in einer Behälteraufnahme um eine Achse gedreht wird, wobei die Behälterbehandlungsmaschine eine Kamera, die ein Bild des in der Behälteraufnahme stromauf der Behandlungseinheit transportierten Behälters aufnimmt, und ein Ausrichtmodul, das einen Behälter durch Ansteuern der Behälteraufnahme in eine Zielstellung dreht, umfasst, **dadurch gekennzeichnet, dass** das Ausrichtmodul ein neuronales Netz umfasst, das durch Verarbeiten des Bildes des in einer Behälteraufnahme stromauf der Behandlungseinheit transportierten Behälters eine nötige Drehung des Behälters von seiner aktuellen Position zur Zielstellung bestimmt, das Ausrichtmodul die Drehung der Behälteraufnahme in Abhängigkeit von der bestimmten Drehung steuert und das neuronale Netz ausgebildet ist, aus während des Betriebs der Behälterbehandlungsmaschine aufgenommenen Bildern von Behältern aktuelle Positionen von Behältern in Relation zu einer Zielstellung zu lernen.

8. Verfahren nach Anspruch 7, wobei das neuronale Netz ein vorgelerntes neuronales Netz ist.

9. Verfahren nach einem der Ansprüche 7 bis 8, wobei die Behälterbehandlungsmaschine eine Eingabeeinheit umfasst, mit der ein Bediener einen Behältertyp und/oder einen Typ eines Ausrichtmerkmals eingibt, und wobei anhand des eingegebenen Behältertyps und/oder des eingegebenen Ausrichtmerkmals das neuronale Netzwerk die Zielstellung ermittelt.

10. Verfahren nach einem der Ansprüche 7 bis 9, wobei das neuronale Netz zum Bestimmen der Drehung in genau einem Bild des Behälters in seiner aktuellen Position in einem ersten Schritt ein Ausrichtmerkmal, anhand dessen die Zielstellung des Behälters definiert ist, sucht und, wenn das Ausrichtmerkmal zumindest teilweise in dem Bild des Behälters gefunden wird, aus der Position des Ausrichtmerkmals in dem Bild und der Zielstellung des Ausrichtmerkmals die Drehung bestimmt;
und wobei das neuronale Netz in einem zweiten Schritt, falls das Ausrichtmerkmal in dem genau einen Bild nicht zumindest teilweise gefunden wird, anhand der in dem Bild vorhandenen Informationen eine mögliche Lage des Ausrichtmerkmals bestimmt und das Ausrichtmodul anhand der möglichen Lage des Ausrichtmerkmals eine Drehung des Behälters in der Behälteraufnahme bewirkt, wobei in einem dritten Schritt ein zweites Bild eines Behälters in der gedrehten Position aufgenommen wird und das neuronale Netz das Ausrichtmerkmal in dem zweiten Bild sucht und, wenn das Ausrichtmerkmal zumindest teilweise in dem Bild des Behälters gefunden wird, aus der Position des Ausrichtmerkmals in dem Bild und der Zielstellung des Ausrichtmerkmals die Drehung bestimmt.

11. Verfahren nach Anspruch 10, wobei das neuronale Netz aus einem Ergebnis des zweiten Schritts und des dritten Schritts lernt.

## Claims

1. Container treatment machine for treating containers, such as bottles, cans or the like, the container treatment machine comprising a treatment unit for treating containers and container receptacles in which containers can be received so as to be rotatable about an axis, the container treatment machine comprising a camera for capturing an image of a container transported in a container receptacle upstream of the treatment unit and an alignment module, wherein the alignment module is configured to rotate a container to a target position by controlling the container receptacle, **characterized in that** the alignment module comprises a neural network which is configured to determine a necessary rotation of the container from its current position to the target position by processing the image of a container transported in a container receptacle upstream of the treatment unit, the alignment module is configured to control the rotation of the container receptacle depending on the determined rotation and the neural network is adapted to learn current positions of containers in relation to a target position from images acquired during operation of the container treatment machine.

2. Container treatment machine of claim 1, wherein the neural network is a Deep Neural Network (DNN) or a Convolutional Neural Network.

3. Container treatment machine according to any one of claims 1 to 2, wherein the target position is determined based on an alignment feature of the container.

4. Container treatment machine according to claim 3, wherein the container treatment machine comprises an input unit for an operator to input a type of container and/or a type of an alignment feature, based on which the neural network enables determination of the target position.

5. Container treatment machine according to any one of claims 1 to 4, wherein the container treatment machine comprises at least one of a labeling machine, a printing machine, a direct printing machine, an inspection machine, a packer.

6. Container treatment machine according to any one of claims 1 to 5, wherein the container receptacle comprises a turntable and a rotatable centering bell, enabling a container to be clamped and rotated between the turntable and the rotatable centering bell.

7. Method for aligning a container in a container receptacle of a container treatment machine, wherein the container is aligned into a target position before a treatment step is performed on the container by means of a treatment unit of the container treatment machine, wherein the container is rotated about an axis from a current position to the target position in a container receptacle, wherein the container treatment machine comprises a camera, which captures an image of the container transported in the container receptacle upstream of the treatment unit, and an alignment module that rotates a container to a target position by controlling the container receptacle, **characterized in that** the alignment module comprises a neural network that determines a necessary rotation of the container from its current position to the target position by processing the image of the container transported in a container receptacle upstream of the treatment unit, the alignment module controls the rotation of the container receptacle depending on the determined rotation and the neural network is adapted to learn current positions of containers relative to a target position from images of containers captured during operation of the container treatment machine.

8. Method of claim 7, wherein the neural network is a pre-learned neural network.

9. Method of any one of claims 7 to 8, wherein the container treatment machine comprises an input unit with which an operator inputs a container type and/or a type of an alignment feature, and wherein the neural network determines the target position based on the input container type and/or the input alignment feature.

10. Method according to any one of claims 7 to 9, wherein the neural network, for determining the rotation in exactly one image of the container in its current position, in a first step searches for an alignment feature by means of which the target position of the container is defined and, if the alignment feature is found at least partially in the image of the container, determines the rotation from the position of the alignment feature in the image and the target position of the alignment feature;
and wherein in a second step, if the alignment feature is not found at least partially in the exactly one image, the neural network determines a possible position of the alignment feature based on the information present in the image and the alignment module causes a rotation of the container in the container receptacle based on the possible position of the alignment feature, wherein in a third step a second image of a container is taken in the rotated position and the neural network searches for the alignment feature in the second image and, if the alignment feature is found at least partially in the image of the container, determines the rotation from the position of the alignment feature in the image and from the target position of the alignment feature.

11. Method of claim 10, wherein the neural network learns from a result of the second step and the third step.

## Revendications

1. Machine de traitement de récipients pour traiter des récipients, tels que des bouteilles, des boîtes ou similaires, la machine de traitement de récipients comprenant une unité de traitement pour traiter des récipients et des réceptacles de récipients dans lesquels des récipients peuvent être reçus de manière rotative autour d'un axe, la machine de traitement de récipients comprenant une caméra pour prendre une image d'un récipient transporté dans un réceptacle de récipients en amont de l'unité de traitement et un module d'alignement, le module d'alignement étant adapté pour faire tourner un récipient dans une position cible en commandant le réceptacle de récipients, **caractérisée en ce que** le module d'alignement est adapté pour faire tourner le récipient dans une position cible en commandant le réceptacle de récipients, **en ce que** le module d'alignement comprend un réseau neuronal qui est conçu pour déterminer, par traitement de l'image d'un récipient transporté dans un réceptacle de récipient en amont de l'unité de traitement, une rotation nécessaire du récipient depuis sa position actuelle vers la position cible, le module d'alignement est conçu pour commander la rotation du réceptacle de récipient en fonction de la rotation déterminée et le réseau neuronal est conçu pour apprendre, à partir d'images obtenues pendant le fonctionnement de la machine de traitement de récipient, des positions actuelles de récipients par rapport à une position cible.

2. Machine de traitement de récipients selon la revendication 1, dans laquelle le réseau neuronal est un réseau neuronal profond (DNN) ou un réseau neuronal convolutif.

3. Machine de traitement de récipients selon l'une quelconque des revendications 1 à 2, dans laquelle la position cible est déterminée à l'aide d'une caractéristique d'orientation du récipient.

4. Machine de traitement de récipients selon la revendication 3, dans laquelle la machine de traitement de récipients comprend une unité de saisie permettant à un opérateur de saisir un type de récipient et/ou un type de caractéristique d'alignement à partir duquel le réseau neuronal peut déterminer la position cible.

5. Machine de traitement de récipients selon l'une quelconque des revendications 1 à 4, dans laquelle la machine de traitement de récipients comprend au moins une machine parmi une machine d'étiquetage, une machine d'impression, une machine d'impression directe, une machine d'inspection et une machine d'emballage.

6. Machine de traitement de récipients selon l'une quelconque des revendications 1 à 5, dans laquelle le réceptacle de récipients comprend un plateau rotatif et une cloche de centrage rotative, un récipient pouvant être serré et tourné entre le plateau rotatif et la cloche de centrage rotative.

7. Procédé d'orientation d'un récipient dans un réceptacle de récipient d'une machine de traitement de récipient, dans lequel le récipient est orienté vers une position cible avant qu'une étape de traitement ne soit effectuée sur le récipient au moyen d'une unité de traitement de la machine de traitement de récipient, dans lequel le récipient est tourné autour d'un axe depuis une position actuelle vers la position cible dans un réceptacle de récipient, la machine de traitement de récipient comprenant une caméra qui prend une image du récipient transporté dans le réceptacle de récipient en amont de l'unité de traitement, et un module d'orientation qui fait tourner un récipient vers une position cible en entraînant le réceptacle de récipient, **caractérisé en ce que** le module d'alignement comprend un réseau neuronal qui, en traitant l'image du récipient transporté dans un réceptacle de récipient en amont de l'unité de traitement, détermine une rotation nécessaire du récipient depuis sa position actuelle vers la position cible, le module d'alignement commande la rotation du réceptacle de récipient en fonction de la rotation déterminée, et le réseau neuronal est adapté pour apprendre des positions actuelles de récipients par rapport à une position cible à partir d'images de récipients prises pendant le fonctionnement de la machine de traitement de récipients.

8. Procédé selon la revendication 7, dans lequel le réseau neuronal est un réseau neuronal pré-entraîné.

9. Procédé selon l'une des revendications 7 à 8, dans lequel la machine de traitement de récipients comprend une unité d'entrée avec laquelle un opérateur entre un type de récipient et/ou un type de caractéristique d'alignement, et dans lequel le réseau neuronal détermine la position cible à l'aide du type de récipient entré et/ou de la caractéristique d'alignement entrée.

10. Procédé selon l'une des revendications 7 à 9, dans lequel le réseau neuronal, pour déterminer la rotation dans exactement une image du récipient dans sa position actuelle, recherche dans une première étape une caractéristique d'alignement, à l'aide de laquelle la position cible du récipient est définie, et, si la caractéristique d'alignement est trouvée au moins partiellement dans l'image du récipient, détermine la rotation à partir de la position de la caractéristique d'alignement dans l'image et de la position cible de la caractéristique d'alignement ; et
le réseau neuronal déterminant dans une deuxième étape, si la caractéristique d'alignement n'est pas trouvée au moins partiellement dans l'image exacte, une position possible de la caractéristique d'alignement à l'aide des informations présentes dans l'image et le module d'alignement provoquant une rotation du récipient dans le logement de récipient à l'aide de la position possible de la caractéristique d'alignement, dans lequel, dans une troisième étape, une deuxième image d'un récipient est prise dans la position tournée et le réseau neuronal recherche la caractéristique d'alignement dans la deuxième image et, si la caractéristique d'alignement est trouvée au moins partiellement dans l'image du récipient, détermine la rotation à partir de la position de la caractéristique d'alignement dans l'image et de la position cible de la caractéristique d'alignement.

11. Procédé selon la revendication 10, dans lequel le réseau neuronal apprend à partir d'un résultat de la deuxième étape et de la troisième étape.
